# EUROPÄISCHE PATENTSCHRIFT

(11) **EP 4 054 918 B1**
(45) Veröffentlichungstag und Bekanntmachung des Hinweises auf die Patenterteilung: **23.10.2024**
(21) Anmeldenummer: 20829314.2
(22) Anmeldetag: 05.11.2020
(51) Int. Cl.: B62D 1/185, B62D 5/00

(54) **FEEDBACK-AKTUATOR FÜR EINE LENKEINRICHTUNG EINES KRAFTFAHRZEUGS**
FEEDBACK ACTUATOR FOR A STEERING DEVICE OF A MOTOR VEHICLE
ACTIONNEUR À RÉTROACTION POUR UN SYSTÈME DE DIRECTION D'UN VÉHICULE À MOTEUR

(30) Priorität: 08.11.2019 DE 102019217279
(43) Veröffentlichungstag der Anmeldung: 14.09.2022
(73) Patentinhaber: thyssenkrupp Presta AG, 9492 Eschen (LI); thyssenkrupp AG, 45143 Essen (DE)
(72) Erfinder: BLÄTTLER, Simon, 9472 Grabs (CH); GALEHR, Robert, 9486 Schaanwald (LI)
(74) Vertreter: thyssenkrupp Intellectual Property GmbH
(86) Internationale Anmeldenummer: PCT/EP2020/000187
(87) Internationale Veröffentlichungsnummer: WO 2021/089180

(56) Entgegenhaltungen:
- WO-A1-2019/145281
- DE-A1- 10 033 810
- DE-A1- 102015 213 303

## Beschreibung

### Stand der Technik

Die Erfindung betrifft einen Feedback-Aktuator für eine Lenkeinrichtung eines Kraftfahrzeugs, umfassend eine Manteleinheit, die einen an einem Kraftfahrzeug anbringbaren Außenmantel aufweist, in dem ein Innenmantel in Längsrichtung teleskopartig verstellbar aufgenommen ist, in dem eine Lenkspindel um eine Längsachse drehbar gelagert ist, wobei ein elektrischer Motor einer Antriebseinheit in einem Innenraum der Manteleinheit angeordnet ist, der einen an der Manteleinheit fixierten Stator aufweist und einen drehend antreibbaren Rotor mit einer Rotorwelle, die über ein Getriebe mit der Lenkspindel gekuppelt ist, wobei der Stator an dem Außenmantel fixiert ist.

Steer-by-wire-Lenksysteme für Kraftfahrzeuge nehmen manuelle Lenkbefehle des Fahrers wie konventionelle mechanische Lenkungen durch Drehung eines Lenkrades einer Eingabeeinheit entgegen, welches am fahrerseitigen, hinteren Ende einer Lenkspindel angebracht ist. Die Lenkspindel ist jedoch nicht mechanisch über das Lenkgetriebe mit den zu lenkenden Rädern verbunden ist, sondern mit Drehwinkel- bzw. Drehmomentsensoren zusammenwirkt, die den eingebrachten Lenkbefehl erfassen und ein daraus bestimmtes elektrisches Steuersignal an einen Lenksteller abgeben, der mittels eines elektrischen Stellantriebs einen entsprechenden Lenkeinschlag der Räder einstellt.

Bei steer-by-wire-Systemen erhält der Fahrer von den gelenkten Rädern keine unmittelbare physische Rückmeldung über den Lenkstrang, welche bei konventionellen mechanisch gekoppelten Lenkungen als Reaktions- bzw. Rückstellmoment in Abhängigkeit von der Fahrbahnbeschaffenheit, der Fahrzeuggeschwindigkeit, dem aktuellen Lenkwinkel und weiterer Betriebszustände zum Lenkrad zurückgemeldet werden. Die fehlende haptische Rückmeldung erschwert dem Fahrer, aktuelle Fahrsituationen sicher zu erfassen und angemessene Lenkmanöver durchzuführen, wodurch die Fahrzeuglenkbarkeit und damit die Fahrsicherheit beeinträchtigt werden.

Zur Erzeugung eines realistischen Fahrgefühls ist es im Stand der Technik bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen ein Rückkopplungs-Signal zu bilden, welches in einen Feedback-Aktuator eingespeist wird. Der Feedback-Aktuator ist in die Eingabeeinheit integriert und weist eine Aktuatoreinheit auf, die einen Handmoment- oder Lenkradsteller mit einer Antriebseinheit umfasst, die abhängig vom Rückkopplungs-Signal ein dem realen Reaktionsmoment entsprechendes Rückstellmoment (Feedbackmoment) über die Lenkspindel in das Lenkrad einkoppelt. Derartige "Force-feedback"-Systeme geben dem Fahrer den Eindruck einer realen Fahrsituation wie bei einer konventionellen Lenkung, was eine intuitive Reaktion erleichtert.

Aus der DE 10 2015 213 303 A1 ist ein gattungsgemäßer Feedback-Aktuator der eingangs genannten Art bekannt. Diese umfasst eine Manteleinheit mit einem Innenmantel, auch als inneres Mantelrohr oder Innenmantelrohr bezeichnet, in dem die Lenkspindel um die Längsachse drehbar gelagert ist, an deren bezüglich der Fahrtrichtung hinteren, dem Fahrer zugewandten Ende das Lenkrad angebracht ist. Der Innenmantel ist in Längsrichtung, d.h. in Richtung der Längsachse teleskopartig axial verschiebbar in einem Außenmantel, auch als äußeres Mantelrohr oder Führungskasten bezeichnet, aufgenommen. Dadurch kann eine Längsverstellung des Lenkrads erfolgen, und um die Lenksäule beispielsweise im autonomen Fahrbetrieb möglichst kompakt im Fahrzeuginnenraum verstauen zu können, kann der Innenmantel in Fahrtrichtung nach vorn möglichst weit in den Außenmantel eingefahren werden.

Die Antriebseinheit des Aktuators umfasst einen elektrischen Motor, der zusammen mit einem Getriebe in einer vorteilhaft kompakten, Bauraum sparenden Anordnung in der Manteleinheit koaxial zur Längsachse untergebracht ist. Dabei ist der Stator in dem Innenmantel axial und drehfest fixiert. Durch die bekannte Anordnung innerhalb des Innenmantels wird beim Verstellen und Verstauen die gesamte Antriebseinheit zusammen mit dem Innenmantel relativ zum Außenmantel axial bewegt. Dadurch muss bei der Längsverstellung die gesamte träge Masse der Antriebseinheit beschleunigt werden, so dass zum schnellen Ein- und Ausfahren eine relativ hohe Antriebsleistung erforderlich ist. Außerdem müssen die elektrischen Versorgungsleitungen bewegbar ausgestaltet sein, um der Relativbewegung des Innenmantels beim Verstellen folgen zu können. Darüber hinaus ist der für das Getriebe im Innenraum des Innenmantels zur Verfügung stehende Bauraum eng begrenzt, so dass die Gestaltung des Getriebes eingeschränkt bzw. technisch aufwendig ist.

Ein Feedback-Aktuator der eingangs genannten Art ist aus der DE 100 33 810 A1 bekannt.

Angesichts der vorangehend erläuterten Problematik ist es eine Aufgabe der vorliegenden Erfindung, die Betriebseigenschaften und die konstruktiven Anpassungsmöglichkeiten zu verbessern.

### Darstellung der Erfindung

Diese Aufgabe wird erfindungsgemäß gelöst durch einen Feedback-Aktuator mit den Merkmalen des Anspruchs 1. Vorteilhafte Weiterbildungen ergeben sich aus den Unteransprüchen.

Bei einem Feedback-Aktuator für eine Lenkeinrichtung eines Kraftfahrzeugs, umfassend eine Manteleinheit, die einen an einem Kraftfahrzeug anbringbaren Außenmantel aufweist, in dem ein Innenmantel in Längsrichtung teleskopartig verstellbar aufgenommen ist, in dem eine Lenkspindel um eine Längsachse drehbar gelagert ist, wobei ein elektrischer Motor einer Antriebseinheit in einem Innenraum der Manteleinheit angeordnet ist, der einen an der Manteleinheit fixierten Stator aufweist und einen drehend antreibbaren Rotor mit Rotorwelle, die über ein Getriebe mit der Lenkspindel gekuppelt ist, wobei der Stator an dem Außenmantel fixiert ist, wird erfindungsgemäß vorgeschlagen, dass der Motor einen Außenquerschnitt aufweist, der kleiner ist als ein Innenquerschnitt des Innenmantels.

Die Rotorwelle ist bevorzugt koaxial oder achsparallel zur Längsachse ausgerichtet.

Durch die Fixierung des Stators ist der Motor bevorzugt koaxial oder achsparallel zur Längsachse in dem Außenmantel angeordnet und in Längsrichtung, d.h. axial und drehfest bezüglich Drehung um die Längsachse befestigt. Durch die Unterbringung des Motors in der Manteleinheit kann eine vorteilhaft kompakte Bauform wie in dem zugrunde gelegten Stand der Technik realisiert werden. Dadurch, dass die Antriebseinheit jedoch nicht wie bisher an dem beim Verstellen bewegten Innenmantel, sondern an dem stationären Außenmantel festgelegt ist, wird die bewegte Masse reduziert, und es kann eine schnellere Verstellung mit relativ geringerer Antriebsleistung erfolgen.

Durch die stationäre Anbringung des Motors an der Manteleinheit sind keine beim Verstellen räumlich bewegbaren elektrischen Leitungen erforderlich, wodurch die Betriebssicherheit erhöht und der Herstellungs- und Montageaufwand verringert wird.

Der Motor der Antriebseinheit ist innerhalb des Außenmantels angebracht. Das mit der Motorwelle verbundene Getriebe kann zwar auch, muss aber nicht zwingend innerhalb des Außenmantels angeordnet sein. Insbesondere ist es nicht erforderlich, dass Getriebe innerhalb des engen Innenraums innerhalb des Innenmantels unterzubringen. Besonders vorteilhaft kann es sein, dass das Getriebe zumindest teilweise außerhalb des Innenraums des Außenmantels angeordnet ist. Dadurch kann ein größerer Bauraum zur Verfügung gestellt werden, der nicht durch die Dimensionierung des Innenraums des Außen- oder Innenmantels begrenzt ist. Dadurch, dass kein hoch belastbarer, miniaturisierter Aufbau erforderlich ist, kann der Konstruktions- und Fertigungsaufwand reduziert werden.

Erfindungsgemäß ist vorgesehen, dass der Motor einen Außenquerschnitt aufweist, der kleiner ist als ein Innenquerschnitt des Innenmantels. Der Außenquerschnitt des Motors korrespondier in der Regel mit dem Außenquerschnitt des Stators. Dadurch, dass dieser kleiner ist als ein axial offener Innenquerschnitt des Innenmantels, der hierzu bevorzugt als Innenmantelrohr ausgebildet sein kann, ist es möglich, dass der Motor im eingefahrenen Zustand, in dem der Innenmantel in den Außenmantel vollständig oder zumindest teilweise eingeschoben ist, zumindest teilweise in einen Innenraum des Innenmantels eintaucht. Dadurch kann die Manteleinheit besonders kompakt gestaltet werden.

Der Stator kann an einer des Innenraum des Außenmantels begrenzenden Innenseite festgelegt sein, beispielsweise einer Mantelfläche oder axialen Stirnseite. Es kann eine lösbare oder unlösbare Verbindung ausgebildet sein, die hinsichtlich eines geringen Fertigungs- und Montageaufwands optimiert sein kann. Bevorzugt können form- und/oder stoffschlüssige Verbindungsmittel eingesetzt werden, beispielsweise Schraub-, Niet-, Klebe- oder Schweißverbindungen, oder auch Bördelungen, Verstemmungen oder dergleichen.

Vorzugsweise sind der Außenmantel und/oder der Innenmantel zumindest abschnittweise rohrförmig ausgebildet sind. Unter einer rohrförmigen Ausbildung werden sämtliche Hohlprofile verstanden und sind nicht auf einen kreiszylindrischen Querschnitt begrenzt. Beispielsweise kann - wie an sich bekannt - ein Außen- oder Innenmantelrohr einen Rohrabschnitt mit einem runden oder unrunden, beispielsweise einem drei-, vier-, sechs-, acht- oder mehreckigen Querschnitt als Außen- bzw. Innenmantelrohr eingesetzt werden.

In einer vorteilhaften Weiterbildung kann es vorgesehen sein, dass zwischen dem Außenmantel und dem Innenmantel ein weiteres Mantelrohr als Zwischenmantelrohr angeordnet ist, welches gegenüber dem Außenmantel und dem Innenmantel verstellbar ist. Solch eine Anordnung wird auch als Mehrfachteleskopanordnung bezeichnet. Es können auch noch weitere Mantelrohre vorgesehen sein.

Es kann vorgesehen sein, dass zwischen dem Motor und dem Außenmantel ein koaxialer Zwischenraum ausgebildet ist, in dem der Innenmantel aufnehmbar ist. Der Zwischenraum befindet sich zwischen dem Stator des Motors und der Innenseite des Außenmantels, und erstreckt sich zumindest abschnittweise in Längsrichtung über den Motor. Der Zwischenraum bietet einen axialen Bewegungsraum, in den der Innenmantel beim Verstellen in Längsrichtung eingeschoben werden kann. Der Zwischenraum ist dabei ringartig ausgebildet. Bevorzugt kann der Motor einen Außenquerschnitt aufweisen, der kleiner ist als ein Innenquerschnitt am vorderen, in den Außenmantel eintauchenden Ende des stirnseitig offenen Innenmantelrohrs. Dadurch, dass der Motor beim Einschieben des Innenmantels in den Außenmantel in Längsrichtung axial von vorn in das Innenmantelrohr eintauchen kann, ist eine kurze Länge in maximal zusammengeschobenen Verstauposition der Manteleinheit realisierbar.

Es kann vorgesehen sein, dass die Antriebseinheit über eine in Längsrichtung längenveränderbare Wellenanordnung mit der Lenkspindel gekuppelt ist. Über die Wellenanordnung wird das von der Antriebseinheit erzeugte Drehmoment auf die Lenkspindel übertragen. Durch die längenveränderbare Wellenanordnung kann der in unterschiedlichen Verstellzuständen der Manteleinheit unterschiedliche, beim Verstellen veränderbare axiale Abstand zwischen Außen- und Innenmantel ausgeglichen werden, so dass in jeder Längseinstellung der Manteleinheit die Drehmomentübertragung gewährleistet ist. Es können an sich bekannte längenvariable Wellenanordnungen eingesetzt werden, beispielsweise teleskopierbare Zahnwellen oder unrunde Wellen, bei denen jeweils eine Innenwelle mit unrundem Querschnitt drehmomentschlüssig in einen korrespondierenden Innenquerschnitt einer Hohl- oder Außenwelle axial verschiebbar eingreift. Bei der Erfindung weist beispielsweise die Lenkspindel eine Hohlwelle auf, in die eine von der Antriebseinheit drehend antreibbare Innenwelle eingreift, oder umgekehrt. Im Unterschied zum Stand der Technik ist lediglich der relativ zum Außenmantel axial bewegbare Teil der Wellenanordnung als Teil der Lenkspindel in dem Innenmantel gelagert, wodurch die gesamte beim Verstellen bewegte Masse des Innenmantels in vorteilhafter Weise relativ klein gestaltet werden kann. Jedenfalls ist diese bewegte Masse in der Regel deutlich kleiner, als wenn wie im Stand der Technik die Antriebseinheit mit dem Innenmantel verbunden ist.

Bevorzugt kann vorgesehen sein, dass der Motor in einem dem Innenmantel in Längsrichtung abgewandten Endbereich des Außenmantels angeordnet ist. Der Stator ist erfindungsgemäß entsprechend in einem in Fahrtrichtung vorderen Bereich des Außenmantels fixiert. Dadurch kann die Antriebseinheit von der vorderen Stirnseite an dem Außenmantel montiert werden, bevorzugt an einem Außenmantelrohr. Vorteilhaft sind der unkomplizierte Aufbau und die einfache Montage. Darüber hinaus ergeben sich vorteilhafte Möglichkeiten, das Getriebe stirnseitig außerhalb des Mantelrohrs anzubringen, beispielsweise an das Außenmantelrohr anzuflanschen.

Es kann vorgesehen sein, dass das Getriebe zumindest teilweise außerhalb des Innenraums des Außenmantels angeordnet ist. Dadurch können die äußeren Abmessungen des Getriebes, beispielsweise der Außenquerschnitt, größer sein als der Innenquerschnitt des Außenmantelrohrs und insbesondere des noch kleineren Innenquerschnitts des Innenmantels. Das Getriebe kann nach außen über Außenmantel vorstehen, und kann beispielsweise in einem an dem Außenmantel befestigten Getriebegehäuse untergebracht sein. Beispielsweise kann das Getriebe stirnseitig des Außenmantelrohrs angebracht sein, bevorzugt axial an der vorderen Stirnseite am vorderen Ende, beispielsweise in einem Getriebegehäuse, wobei die Motorwelle mit einer koaxialen Eingangswelle des Getriebes gekuppelt sein kann. Dabei ist vorteilhaft, dass die Bauform und die Abmessungen des Getriebes einfach an die geforderten Übertragungseigenschaften und den im Fahrzeug zur Verfügung stehenden Bauraum angepasst werden können. Es können beispielsweise ein-, zwei oder mehrstufige Getriebe, auch in unterschiedlichen Zahnrad-, Riemen-, Planeten- oder sonstige Getriebebauformen realisiert werden. Der Einsatz eines stufenlosen Getriebes (Continuously Variable Transmission) ist ebenfalls denkbar und möglich. Dabei ist es einfach möglich, Getriebe mit unterschiedlichen Charakteristiken zur Anpassung an unterschiedliche Fahrzeugtypen und Einsatzzwecke an einer Manteleinheit zu montieren. Dadurch wird die Flexibilität der Fertigung erhöht.

Eine vorteilhafte Weiterbildung kann vorsehen, dass die Rotorwelle als Hohlwelle ausgebildet ist, durch die eine Ausgangswelle des Getriebes oder die Lenkspindel koaxial hindurchgeführt und mit der Lenkspindel gekuppelt ist. Die zur Längsachse koaxiale Rotorwelle kann beispielsweise durch eine Öffnung des Außenmantels, beispielsweise eine vordere stirnseitige axiale Öffnung eines Außenmantelrohrs, mit der Eingangswelle des Getriebes verbunden sein. Das Getriebe kann beispielsweise wie in der vorangehend beschriebenen Ausführung am vorderen Ende des Außenmantelrohrs angebracht sein, wobei eine Eingangswelle mit der Rotorwelle gekuppelt ist. Die Eingangswelle wirkt über übertragungsspezifische Getriebeglieder wie Zwischenräder, Zwischenwellen oder dergleichen mit der Ausgangswelle zusammen. Die Ausgangswelle ist ebenfalls koaxial zur Längsachse angeordnet, und durch die als Hohlwelle ausgebildete Rotorwelle axial nach innen in den Außenmantel hindurchgeführt und mit der Lenkspindel verbunden, oder ein Wellenteil der Lenkspindel ist durch die Rotorwelle nach außen aus dem Außenmantel hindurchgeführt und mit der Ausgangswelle gekuppelt. Durch die koaxiale Anordnung von Rotorwelle und Ausgangswelle kann eine besonders kompakte Bauform realisiert werden.

An dem Außenmantel oder an dem Getriebegehäuse kann eine elektrische Steuereinheit angebracht sein. Diese kann elektrische Steuerungs- und Anschlussmittel zum Betrieb des Motors aufweisen. Vorteilhaft kann auf diese Weise eine kompakte Bauform ausgebildet werden.

Bevorzugt kann das Getriebe, welches ein oder mehrstufig ausgebildet sein kann, ein Übersetzungsverhältnis (Gesamtübersetzungsverhältnis) zwischen 1:3 und 1:25 aufweisen, besonders bevorzugt zwischen 1:5 und 1:15. Es kann beispielsweise als ein- oder mehrstufiges Stirnrad-, Riemen- oder sonstiges Getriebe ausgebildet sein. Es kann vorteilhaft sein, dass das Getriebe ein Getriebegehäuse aufweist, welches lösbar oder unlösbar mit dem Außenmantel verbunden ist. Dadurch kann ein Getriebe einfach als Getriebebaugruppe bereitgestellt und montiert werden. Es ist auch denkbar und möglich, unterschiedliche Getriebebaugruppen mit an unterschiedliche Einsatzzwecke angepassten Übertragungseigenschaften bereitzustellen, die bedarfsweise zur Realisierung unterschiedlicher Feedback-Charakteristiken an einer Manteleinheit montiert werden können.

Es kann vorgesehen sein, dass zwischen dem Innenmantel und dem Außenmantel ein motorischer Verstellantrieb angeordnet ist. Der Verstellantrieb umfasst bevorzugt einen Linearantrieb, der zwischen Innen- und Außenmantel wirksam ist. Dadurch kann eine motorische Längsverstellung der Manteleinheit erfolgen. Beispielsweise kann der Verstellantrieb einen durch einen elektrischen Stellmotor antreibbaren Rotations- oder Tauchspindelantrieb aufweisen, der an dem Innen- und Außenmantel angreift.

Zur Anbringung in einem Kraftfahrzeug kann vorgesehen sein, dass die Manteleinheit von einer mit einer Fahrzeugkarosserie verbindbaren Trageinheit gehalten wird. Die Trageinheit dient zur Halterung der Manteleinheit, konkret zur Fixierung des Außenmantels in Längsrichtung relativ zur Kraftfahrzeugkarosserie. Zur Höhenverstellung kann die Manteleinheit relativ zur Trageinheit quer zur Längsachse in Höhenrichtung verstellbar angebracht sein, um die Höhe des Lenkrads relativ zur Fahrerposition einstellen zu können. Die Höhenverstellung kann durch Verschwenken der Manteleinheit um eine horizontale Schwenkachse in der Trageinheit erfolgen, und zwar entweder manuell, oder ebenfalls mittels eines motorischen Stellantriebs ähnlich wie vorangehend für die Längsverstellung beschrieben.

### Beschreibung der Zeichnungen

Vorteilhafte Ausführungsformen der Erfindung werden im Folgenden anhand der Zeichnungen näher erläutert. Im Einzelnen zeigen:
- Figur 1: einen Lenkeinrichtung für ein Kraftfahrzeug mit einem erfindungsgemäßen Feedback-Aktuator in einer schematischen perspektivischen Ansicht,
- Figur 2: die Lenkeinrichtung gemäß Figur 1 in einer weiteren perspektivischen Ansicht,
- Figur 3: die Lenkeinrichtung in einer perspektivischen Ansicht wie in Figur 2 in einer teilweise offenen schematischen Darstellung,
- Figur 4: die Lenkeinrichtung in einer perspektivischen Ansicht wie in Figur 1 in einer teilweise offenen schematischen Teildarstellung,
- Figur 5: einen Längsschnitt durch eine Lenkeinrichtung gemäß Figur 1 oder 2.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

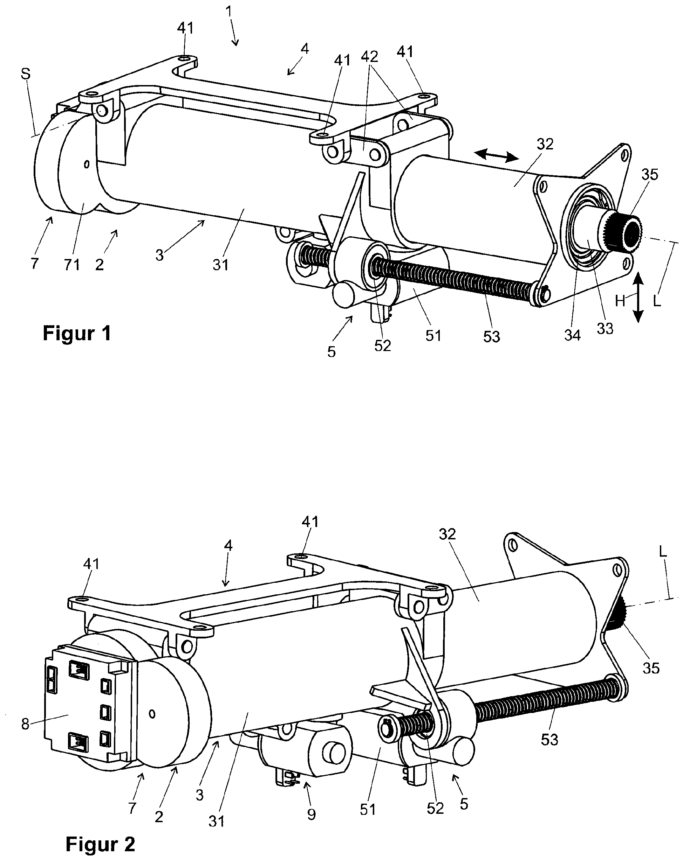

Figuren 1 und 2 zeigen schematisch perspektivische Außenansichten einer Lenkeingabevorrichtung 1 für ein nicht dargestelltes Kraftfahrzeug in Form einer längenverstellbaren Lenksäule, die einen erfindungsgemäßen Feedback-Aktuator 2 aufweist. Im Einzelnen zeigen Figur 1 eine Ansicht schräg von hinten links - bezogen auf die Fahrtrichtung - und Figur 2 schräg von vorn links, also auf dieselbe Seite entgegen der Fahrtrichtung.

Der Feedback-Aktuator 2 weist eine Manteleinheit 3 auf, mit einem im Wesentlichen rohrförmigen Außenmantel 31, auch als äußeres Mantelrohr oder Führungskasten bezeichnet, der nach hinten offen ist, und in dem koaxial zu einer Längsachse L ein rohrfömiger Innenmantel 32, auch als inneres Mantelrohr oder Innenmantel bezeichnet, aufgenommen ist, der in Richtung einer zentralen Längsachse L in Längsrichtung bzw. axial teleskopartig verschiebbar ist, wie mit einem Doppelpfeil angedeutet.

Eine Lenkspindel 33 ist in dem Innenmantel 32 um die Längsachse L in einem Lager 34 drehbar gelagert. Am hinteren, der Fahrerposition zugewandten Ende hat die Lenkspindel 33 einen Aufnahmeabschnitt 35 zur Anbringung eines nicht dargestellten Lenkrads.

Die Lenkspindel 33 ist als längenvariable Welle ausgebildet mit einer Innenwelle 36, die den Aufnahmeabschnitt 35 aufweist und in dem Lager 34 gelagert ist, die drehmomentschlüssig und axial verschiebbar in eine Hohlwelle 37 eintaucht. Die Innenwelle 36 und die Hohlwelle 37 können zur Drehmomentübertragung in an sich bekannter Weise korrespondierende unrunde Querschnitte oder Längsverzahnungen aufweisen.

Eine Trageinheit 4 weist zur Befestigung an einer nicht dargestellten Karosserie des Fahrzeugs Befestigungsöffnungen 41 auf. In seinem vorderen Bereich ist der Außenmantel 31 um eine horizontale, quer zur Längsachse L liegende Schwenkachse S verschwenkbar mit der Trageinheit 4 verbunden. Im hinteren Bereich ist ein Schwenkhebel 42 an dem Außenmantel 31 und der Trageinheit 2 angelenkt, so dass eine Verschwenkung der Manteleinheit 3 relativ zur Trageinheit 4 ermöglicht wird, wobei eine Höhenverstellung des an dem Aufnahmeabschnitt 35 angebrachten Lenkrads in Höhenrichtung H ermöglich ist, wie mit dem Doppelpfeil angedeutet.

Ein Längsverstellantrieb 5, der im gezeigten Beispiel als linearer Tauchspindelantrieb ausgebildet ist, umfasst eine von einem Stellmotor 51 drehend antreibbare Spindelmutter 52, die in Längsrichtung an dem Außenmantel 31 abgestützt ist, in die eine Gewindespindel 53 eingreift, die im parallel zur Längsachs L angeordnet, und in Längsrichtung an dem Innenmantel 32 abgestützt ist. Durch relative Drehung mittels des Stellmotors 51 werden die Gewindespindel 53 und die Spindelmutter 52 in Längsrichtung relativ zueinander verlagert, wodurch der Innenmantel 32 zur Längsverstellung teleskopierend ein- oder ausfahrbar ist.

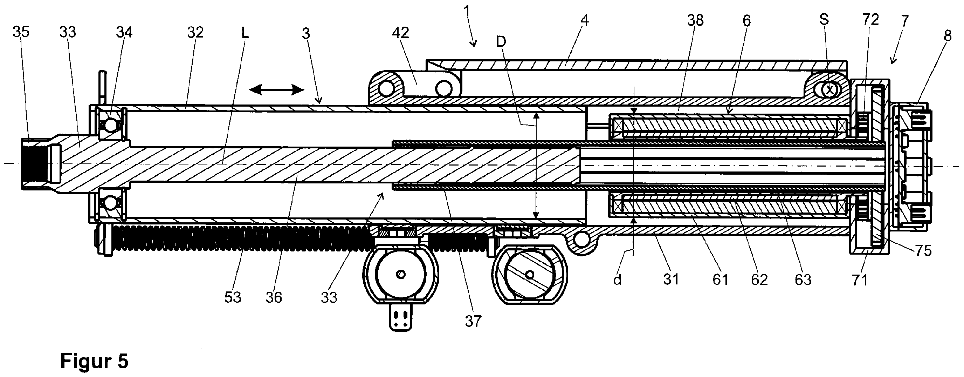

Figur 5 zeigt einen Längsschnitt durch die Manteleinheit 3. Ein elektrischer Motor 6 des Feedback-Akuators 2 weist einen Stator 61 auf, der einen darin drehend antreibbaren Rotor 62 koaxial umgibt. Der Rotor 62 weist eine als Hohlwelle ausgebildete Rotorwelle 63 auf, die koaxial zur Längsachse L angeordnet ist. Der Motor 6 ist dadurch mit der Manteleinheit 3 verbunden, dass der Stator 61 koaxial im vorderen Bereich Innenraum des Außenmantels 31 in Längsrichtung und drehfest bezüglich Drehung um die Längsachse L fixiert ist.

Am hinteren Ende ist ein Getriebe 7 stirnseitig außerhalb des Innenraums an dem Außenmantel 31 befestigt. Das Getriebe 7 weist ein Getriebegehäuse 71 auf, welches wie dargestellt auf der vorderen axialen Öffnung des Außenmantels befestigt ist. Der Stator 61 kann dabei wie im gezeigten Beispiel axial mit der dem Außenmantel 31 zugewandten Stirnwand des Gehäuses 71 verbunden sein, wodurch der Motor 6 in dem Innenraum positioniert und fixiert ist. Die Lenkspindel 33 ist innerhalb der Rotorwelle 63 drehbar angeordnet, wobei die Hohlwelle 37 axial durch die Rotorwelle 63 hindurchgeführt ist, ohne das es zu einer Berührung von Rotorwelle 63 und Hohlwelle 37 kommt.

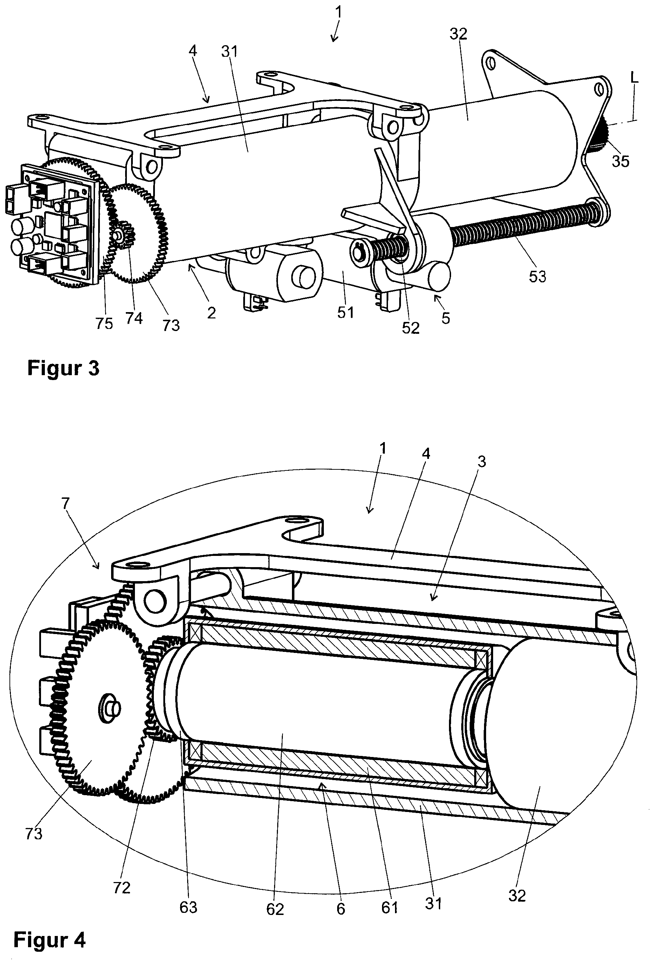

Die Rotorwelle 63 steht nach hinten axial aus dem Innenraum des Außenmantels 31 heraus und ist mit einem koaxial zur Längsachse L gelagerten Eingangsrad 72 des Getriebes 7 gekuppelt, welches als Stirnrad ausgebildet ist. Aus den schematischen perspektivischen Darstellungen von Figur 3 und 4, in denen das Getriebegehäuse 71 zur besseren Übersicht weggelassen ist, ist erkennbar, dass das Eingangsrad 72 mit einem exzentrisch von der Längsachse L gelagerten ersten Zwischenrad 73 kämmt, welches drehfest mit einem zweiten Zwischenrad 74 mit geringerer Zähnezahl verbunden ist, welches in ein Ausgangsrad 75 eingreift.

Das Ausgangsrad 75 ist koaxial zu Längsachse L gelagert, und über die Hohlwelle 37 mit der Lenkspindel 33 drehschlüssig gekuppelt.

Eine Drehung des Rotors 62 durch Ansteuerung des Motors 6 wird über das Getriebe 7 in eine übersetzte, langsamere Drehung des Ausgangsrads 75 und damit der Lenkspindel 33 umgesetzt. Das durch die Zähnezahlen der Zahnräder 72, 73, 74 und 75 bestimmte Übersetzungsverhältnis kann im Bereich von 1:3 und 1:25 liegen, bevorzugt im Bereich von 1:5 und 1:15. Wie aus den dargestellten Beispielen erkennbar ist, hat das Getriebe 7 einen Außenquerschnitt, der größer ist als der Innenquerschnitt des Außenmantels 31. Dabei kann durch die Integration des Motors 6 in den Innenraum des Außenmantels 31 und die stirnseitige Anordnung des Getriebes 7 dennoch eine kompakte Form und eine optimierte Anpassung an den im Kraftfahrzeug zur Verfügung stehenden Bauraum erfolgen.

Bevorzugt hat der Stator 61 und damit der Motor 6 einen Außendurchmesser d, der kleiner ist als der Innendurchmesser D des Innenmantels 32, so dass der Motor 6 einen Außenquerschnitt aufweist, der kleiner ist als ein Innenquerschnitt des Innenmantels 31. Dadurch kann der Innenmantel 32 beim Zusammenfahren der Manteleinheit 3, also in Figur 5 von links nach rechts, in den zwischen dem Motor 6 und der Innenwandung des Außenmantels 31 gebildeten koaxialen Zwischenraum 38 in Längsrichtung eintauchen. Dadurch kann eine kurze Verstaulänge realisiert werden.

Das Getriebegehäuse 71 kann lösbar oder unlösbar mit dem Außenmantel 31 verbunden sein. Die Verbindung kann mittels einer stoffschlüssigen und/oder formschlüssigen und/oder kraftschlüssigen Verbindung erfolgen.

An dem Getriebegehäuse 71 kann eine elektrische Steuereinheit 8 zur Ansteuerung des Motors 6 angebracht sein. Es kann zusätzlich vorgesehen sein, dass die Steuereinheit 8 ebenfalls den Längsverstellantrieb 5 ansteuert.

Zur Höhenverstellung in Höhenrichtung H kann ein Höhenverstellantrieb 9 vorgesehen sein, der im Prinzip ähnlich wie der Längsverstellantrieb 5 als Spindeltrieb ausgebildet sein kann, und beispielsweise zwischen dem Außenmantel 31 und dem Schwenkhebel 42 angreifen kann, oder anderweitig zwischen der Manteleinheit 3 und der Trageinheit 4.

### Bezugszeichenliste

- 1: Lenkeingabevorrichtung
- 2: Feedback-Aktuator
- 3: Manteleinheit
- 31: Außenmantel
- 32: Innenmantel
- 33: Lenkspindel
- 34: Lager
- 35: Aufnahmeabschnitt
- 36: Innenwelle
- 37: Hohlwelle
- 38: Zwischenraum
- 4: Trageinheit
- 41: Befestigungsöffnung
- 42: Schwenkhebel
- 5: Längsverstellantrieb
- 51: Stellmotor
- 52: Spindelmutter
- 53: Gewindespindel
- 6: Motor
- 61: Stator
- 62: Rotor
- 63: Rotorwelle
- 7: Getriebe
- 71: Getriebegehäuse
- 72: Eingangsrad
- 73,74: Zwischenrad
- 75: Ausgangsrad
- 8: Steuereinheit
- 9: Höhenverstellantrieb
- D, d: Außendurchmesser

- L: Längsachse
- S: Schwenkachse

## Patentansprüche

1. Feedback-Aktuator (2) für eine Lenkeinrichtung (1) eines Kraftfahrzeugs, umfassend eine Manteleinheit (3), die einen an einem Kraftfahrzeug anbringbaren Außenmantel (31) aufweist, in dem ein Innenmantel (32) in Längsrichtung teleskopartig verstellbar aufgenommen ist, in dem eine Lenkspindel (33) um eine Längsachse (L) drehbar gelagert ist, wobei ein elektrischer Motor (6) einer Antriebseinheit in einem Innenraum der Manteleinheit (3) angeordnet ist, der einen an der Manteleinheit (3) fixierten Stator (61) aufweist und einen drehend antreibbaren Rotor (62) mit einer Rotorwelle (63), die über ein Getriebe (7) mit der Lenkspindel (33) gekuppelt ist,
wobei der Stator (61) an dem Außenmantel (31) fixiert ist,
**dadurch gekennzeichnet,**
**dass** der Motor (6) einen Außenquerschnitt aufweist, der kleiner ist als ein Innenquerschnitt des Innenmantels (32).

2. Feedback-Aktuator nach Anspruch 1, **dadurch gekennzeichnet, dass** der Außenmantel (31) und/oder der Innenmantel (32) zumindest abschnittweise rohrförmig ausgebildet sind.

3. Feedback-Aktuator nach einem der vorangehenden Ansprüche, **dadurch gekennzeichnet, dass** zwischen dem Motor (6) und dem Außenmantel (31) ein koaxialer Zwischenraum (38) ausgebildet ist, in dem der Innenmantel (32) aufnehmbar ist.

4. Feedback-Aktuator nach einem der vorangehenden Ansprüche, **dadurch gekennzeichnet, dass** die Antriebseinheit (6, 7) über eine in Längsrichtung längenveränderbare Wellenanordnung (36, 37) mit der Lenkspindel (33) gekuppelt ist.

5. Feedback-Aktuator nach einem der vorangehenden Ansprüche, **dadurch gekennzeichnet, dass** der Motor (6) in einem dem Innenmantel (32) in Längsrichtung abgewandten Endbereich des Außenmantels (31) angeordnet ist.

6. Feedback-Aktuator nach einem der vorangehenden Ansprüche, **dadurch gekennzeichnet, dass** das Getriebe (7) zumindest teilweise außerhalb des Innenraums des Außenmantels (31) angeordnet ist.

7. Feedback-Aktuator nach einem der vorangehenden Ansprüche, **dadurch gekennzeichnet, dass** das Getriebe (7) stirnseitig an dem Außenmantel (31) angebracht ist.

8. Feedback-Aktuator nach einem der vorangehenden Ansprüche, **dadurch gekennzeichnet, dass** die Rotorwelle (63) als Hohlwelle ausgebildet ist, durch die eine Ausgangswelle des Getriebes (7) oder die Lenkspindel (33) koaxial hindurchgeführt und mit der Lenkspindel (33) gekuppelt ist.

9. Feedback-Aktuator nach einem der vorangehenden Ansprüche, **dadurch gekennzeichnet, dass** das Getriebe (7) ein Übersetzungsverhältnis zwischen 1:3 und 1:25 aufweist.

10. Feedback-Aktuator nach einem der vorangehenden Ansprüche, **dadurch gekennzeichnet, dass** zwischen dem Innenmantel (32) und dem Außenmantel (31) ein motorischer Verstellantrieb (5) angeordnet ist.

## Claims

1. Feedback actuator (2) for a steering device (1) of a motor vehicle, comprising a casing unit (3) which has an outer casing (31) which can be attached to a motor vehicle and in which an inner casing (32) is accommodated so as to be telescopically adjustable in the longitudinal direction and in which a steering spindle (33) is mounted so as to be rotatable about a longitudinal axis (L), wherein an electric motor (6) of a drive unit is arranged in an interior of the sheath unit (3), which has a stator (61) fixed to the casing unit (3) and a rotor (62) which can be driven in rotation and has a rotor shaft (63) which is coupled to the steering spindle (33) via a gear (7),
the stator (61) being fixed to the outer casing (31),
**characterized in**
**in that** the motor (6) has an external cross-section which is smaller than an internal cross-section of the inner casing (32).

2. Feedback actuator according to claim 1, **characterized in that** the outer casing (31) and/or the inner casing (32) are tubular at least in sections.

3. Feedback actuator according to one of the preceding claims, **characterized in that** a coaxial intermediate space (38) is formed between the motor (6) and the outer casing (31), in which the inner casing (32) can be accommodated.

4. Feedback actuator according to one of the preceding claims, **characterized in that** the drive unit (6, 7) is coupled to the steering spindle (33) via a shaft arrangement (36, 37) which can be varied in length in the longitudinal direction.

5. Feedback actuator according to one of the preceding claims, **characterized in that** the motor (6) is arranged in an end region of the outer casing (31) facing away from the inner casing (32) in the longitudinal direction.

6. Feedback actuator according to one of the preceding claims, **characterized in that** the gear (7) is arranged at least partially outside the interior of the outer casing (31).

7. Feedback actuator according to one of the preceding claims, **characterized in that** the gear (7) is attached to the end face of the outer casing (31).

8. Feedback actuator according to one of the preceding claims, **characterized in that** the rotor shaft (63) is designed as a hollow shaft through which an output shaft of the transmission (7) or the steering spindle (33) is passed coaxially and is coupled to the steering spindle (33).

9. Feedback actuator according to one of the preceding claims, **characterized in that** the transmission (7) has a transmission ratio of between 1:3 and 1:25.

10. Feedback actuator according to one of the preceding claims, **characterized in that** a motorized adjustment drive (5) is arranged between the inner casing (32) and the outer casing (31).

## Revendications

1. Actionneur à rétroaction (2) pour un dispositif de direction (1) d'un véhicule automobile, comprenant une unité d'enveloppe (3) qui présente une enveloppe extérieure (31) pouvant être montée sur un véhicule automobile, dans laquelle est logée une enveloppe intérieure (32) réglable de manière télescopique dans la direction longitudinale, dans laquelle un arbre de direction (33) est logé de manière rotative autour d'un axe longitudinal (L), un moteur électrique (6) d'une unité d'entraînement étant disposé dans un espace intérieur de l'unité d'enveloppe (3), qui présente un stator (61) fixé sur l'unité d'enveloppe (3) et un rotor (62) pouvant être entraîné en rotation avec un arbre de rotor (63), qui est couplé à l'arbre de direction (33) par l'intermédiaire d'un engrenage (7),
le stator (61) étant fixé à l'enveloppe extérieure (31),
**caractérisé en ce que**
**en ce que** le moteur (6) présente une section transversale extérieure qui est plus petite qu'une section transversale intérieure de l'enveloppe intérieure (32).

2. Actionneur à rétroaction selon la revendication 1, **caractérisé en ce que** l'enveloppe extérieure (31) et/ou l'enveloppe intérieure (32) sont de forme tubulaire au moins par sections.

3. Actionneur à rétroaction selon l'une des revendications précédentes, **caractérisé en ce qu'**un espace intermédiaire coaxial (38) est formé entre le moteur (6) et l'enveloppe extérieure (31), dans lequel l'enveloppe intérieure (32) peut être logée.

4. Actionneur à rétroaction selon l'une des revendications précédentes, **caractérisé en ce que** l'unité d'entraînement (6, 7) est couplée à l'arbre de direction (33) par l'intermédiaire d'un agencement d'arbres (36, 37) dont la longueur peut être modifiée dans le sens longitudinal.

5. Actionneur à rétroaction selon l'une des revendications précédentes, **caractérisé en ce que** le moteur (6) est disposé dans une zone d'extrémité de l'enveloppe extérieure (31) qui est opposée à l'enveloppe intérieure (32) dans le sens longitudinal.

6. Actionneur à rétroaction selon l'une des revendications précédentes, **caractérisé en ce que** le réducteur (7) est disposé au moins partiellement à l'extérieur de l'espace intérieur de l'enveloppe extérieure (31).

7. Actionneur à rétroaction selon l'une des revendications précédentes, **caractérisé en ce que** le réducteur (7) est monté frontalement sur l'enveloppe extérieure (31).

8. Actionneur à rétroaction selon l'une des revendications précédentes, **caractérisé en ce que** l'arbre de rotor (63) est réalisé sous forme d'arbre creux à travers lequel un arbre de sortie du réducteur (7) ou l'arbre de direction (33) passe coaxialement et est couplé à l'arbre de direction (33).

9. Actionneur à rétroaction selon l'une des revendications précédentes, **caractérisé en ce que** le réducteur (7) présente un rapport de transmission compris entre 1:3 et 1:25.

10. Actionneur à rétroaction selon l'une des revendications précédentes, **caractérisé en ce qu'**un entraînement de réglage motorisé (5) est disposé entre l'enveloppe intérieure (32) et l'enveloppe extérieure (31).
